# EUROPEAN PATENT APPLICATION

(11) **EP 4 625 640 A1**
(43) Date of publication of application: **01.10.2025**
(21) Application number: 23898399.3
(22) Date of filing: 01.12.2023
(51) Int. Cl.: H01M 50/186, H01M 50/184, H01M 50/176, H01M 50/103, H01M 50/367, B29C 65/00, B29L 31/34

(54) **SECONDARY BATTERY**

(30) Priority: 02.12.2022 KR 20220166857; 30.11.2023 KR 20230170861
(71) Applicant: LG Energy Solution, Ltd., Seoul 07335 (KR)
(72) Inventor: JUNG, Hyun Ok, Daejeon 34122 (KR); CHUN, Yong Ho, Daejeon 34122 (KR); LEE, Jong Min, Daejeon 34122 (KR)
(74) Representative: Plasseraud IP
(86) International application number: PCT/KR2023/019726
(87) International publication number: WO 2024/117876

(57) **Abstract**

A secondary battery according to an embodiment of the present invention may include: an electrode assembly; a frame that surrounds a circumference of the electrode assembly so as to accommodate the electrode assembly, and includes an insulation material; and a pair of exterior sheets sealed to the frame at both sides of the frame, respectively, so as to cover the electrode assembly. A groove facing the outside of the frame may be defined in the frame so that a sealing surface area between the exterior sheet and the frame is increased.

## Description

### TECHNICAL FIELD

### CROSS-REFERENCE TO RELATED APPLICATION

The present application claims the benefit of the priority of Korean Patent Application Nos. 10-2022-0166857, filed on December 5, 2022, and 10-2023-0170861, filed on November 30, 2023, which are hereby incorporated by reference in their entirety.

### TECHNICAL FIELD

The present invention relates to a secondary battery including an electrode assembly and an exterior sheet.

### BACKGROUND ART

In general, types of secondary batteries include nickel-cadmium batteries, nickel-hydrogen batteries, lithium-ion batteries, lithium-ion polymer batteries, and the like. These secondary batteries are applied to and used in not only small-sized products such as digital cameras, P-DVDs, MP3Ps, mobile phones, PDAs, portable game devices, power tools, and E-bikes, but also large-sized products such as electric vehicles and hybrid vehicles, which require high output, energy storage systems for storing surplus generated electricity or new renewable energy, and energy storage systems for backup.

In order to manufacture these secondary batteries, a positive electrode current collector and a negative electrode current collector are first coated with electrode active material slurry to manufacture a positive electrode and a negative electrode, and then the positive electrode and the negative electrode are disposed at both sides of a separator to provide an electrode assembly having a predetermined shape. Then, a battery case accommodates the electrode assembly and is sealed after injection of an electrolyte.

According to the material of the case that accommodates the electrode assembly, the secondary batteries are classified into a pouch type, a can type, and the like. In the pouch type, the electrode assembly is accommodated in a pouch made of a flexible polymer material. In the can type, the electrode assembly is accommodated in a case made of a material such as metal or plastic.

In general, a pouch type battery case is manufactured by performing press processing on a laminate sheet having flexibility to form a cup part. When the cup part is formed, the electrode assembly is accommodated inside the cup part, and a side thereof is sealed to manufacture a secondary battery.

Drawing molding of this press processing is performed by inserting the laminate sheet into a molding apparatus such as press equipment, and applying a pressure to the laminate sheet by using a punch to stretch the laminate sheet.

However, as the thickness of the electrode assembly increases, the depth of the cup part molded in the laminate sheet increases. Thus, there is a concern that the cup part is excessively stretched to cause cracks in the laminate sheet, particularly in a corner of the cup part, and there is a problem that the cracks cause a metal layer of the laminate sheet to be exposed to reduce lifetime of the battery. That is, according to the related art, the depth of the cup part is constrained to lead a limit to increasing the thickness of the electrode assembly.

In addition, in the laminate sheet, terraces around the cup part are sealed to each other to form a sealing part, and double side folding (DSF) is performed on a portion of the sealing part to form a wing folding part in order to increase energy density of the secondary battery. However, there is a limit to increasing the surface area of the sealing part, and there is a problem that the innermost resin layer of the laminate sheet is broken in the wing folding part.

### DISCLOSURE OF THE INVENTION

### TECHNICAL PROBLEM

An object of the present invention for solving the above problems is to provide a secondary battery which has no constraints on a thickness of an electrode assembly and does not require separate molding of a cup part.

### TECHNICAL SOLUTION

A secondary battery according to an embodiment of the present invention may include: an electrode assembly; a frame that surrounds a circumference of the electrode assembly so as to accommodate the electrode assembly, and includes an insulation material; and a pair of exterior sheets sealed to the frame at both sides of the frame, respectively, so as to cover the electrode assembly. A groove facing the outside of the frame may be defined in the frame so that a sealing surface area between the exterior sheet and the frame is increased.

A height of the electrode assembly and a height of the frame may correspond to each other.

The groove may extend along the frame.

The groove may be provided in a plurality of lines parallel to each other.

An opened portion through which an electrode lead connected to the electrode assembly passes may be defined in the frame.

An insulation member that surrounds a portion of the electrode lead may be sealed between the pair of exterior sheets outside the opened portion.

At least one vent hole may be defined in the frame, the at least one vent hole being disposed in a side of the frame other than from a side in which the opened portion is defined.

The frame may include: an inner circumferential surface facing the electrode assembly; an outer circumferential surface disposed at a side opposite to the inner circumferential surface; and a connection surface that connects the inner circumferential surface and the outer circumferential surface to each other.

A thickness between the outer circumferential surface and the inner circumferential surface may be smaller than a height of the frame.

Each of the exterior sheets may include: a cover area that covers the electrode assembly; and an edge area disposed around the cover area and sealed to the connection surface.

The cover area and the edge area may be coplanar.

At least one of the pair of exterior sheets may further include a folding area that is folded from the edge area to be sealed to the outer circumferential surface.

The folding areas of the pair of exterior sheets may not overlap each other.

At least one vent hole covered by the folding area may be defined in the frame.

Each of the exterior sheets may further include a sealing area connected to the edge area, and the sealing areas of the pair of exterior sheets may be sealed to each other.

An opened portion through which an electrode lead connected to the electrode assembly passes may be defined in the frame, and the sealing area may cover the opened portion.

The sealing area of at least one of the pair of exterior sheets may include: a first folding part folded from the edge area toward the outer circumferential surface; and a second folding part folded from the first folding part in a direction opposite to a folding direction of the first folding part.

The first folding part may be sealed to the outer circumferential surface.

### ADVANTAGEOUS EFFECTS

According to the preferred embodiments of the present invention, as the cup part does not need to be molded in the exterior sheet, there are the advantages that there is no concern that the cracks occur in the exterior sheet, and there are no constraints on the thickness of the electrode assembly.

In addition, the large sealing surface area between the frame and the exterior sheet may be secured to increase the sealing strength between the frame and the exterior sheet.

In addition, the outer appearance quality of the secondary battery may be increased.

In addition, as there is no need to perform the DSF on the sealing part to form the wing folding part, there is no concern that the innermost resin layer of the exterior sheet is broken.

In addition, the vent hole may be defined in the frame so that the design is more freely made with respect to the formation position, the size, the number, or the like of the vent hole. Accordingly, the gas and the flame generated due to the fire or the like in the secondary battery may be vented to the desired position and in the desired direction, and the flame spread between or the occurrence of the thermal runaway in the secondary batteries may be delayed.

In addition, the effects may be included which are easily predictable by those skilled in the art from the configurations according to the preferred embodiments of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention. The present invention should not be construed as being limited to only the drawings.
FIG. 1 is a perspective view illustrating an outer appearance of a secondary battery according to an embodiment of the present invention.
FIG. 2 is an exploded perspective view of a secondary battery according to an embodiment of the present invention.
FIG. 3 is a cross-sectional view taken along a line A-A' in FIG. 1.
FIG. 4 is a cross-sectional view taken along a line B-B' in FIG. 1.
FIG. 5 is a plan view of a frame according to another embodiment of the present invention.
FIG. 6 is a side view of a frame according to another embodiment of the present invention.
FIG. 7 is a cross-sectional view taken along a line C-C' in FIG. 5.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

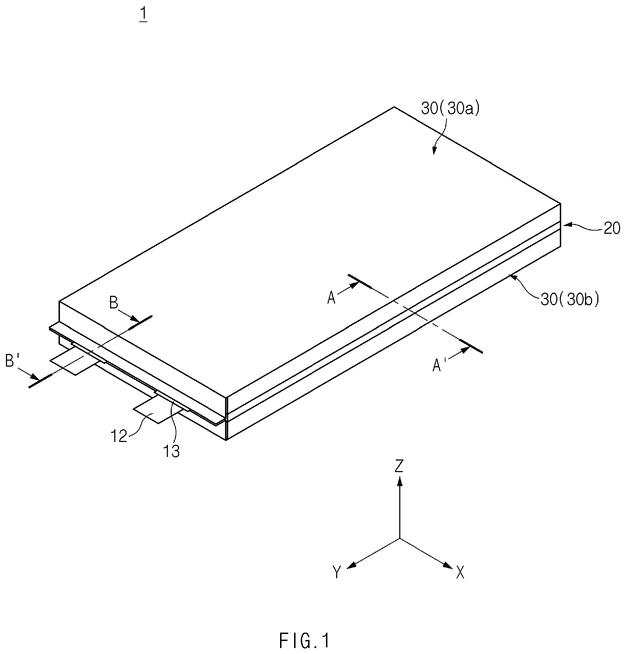

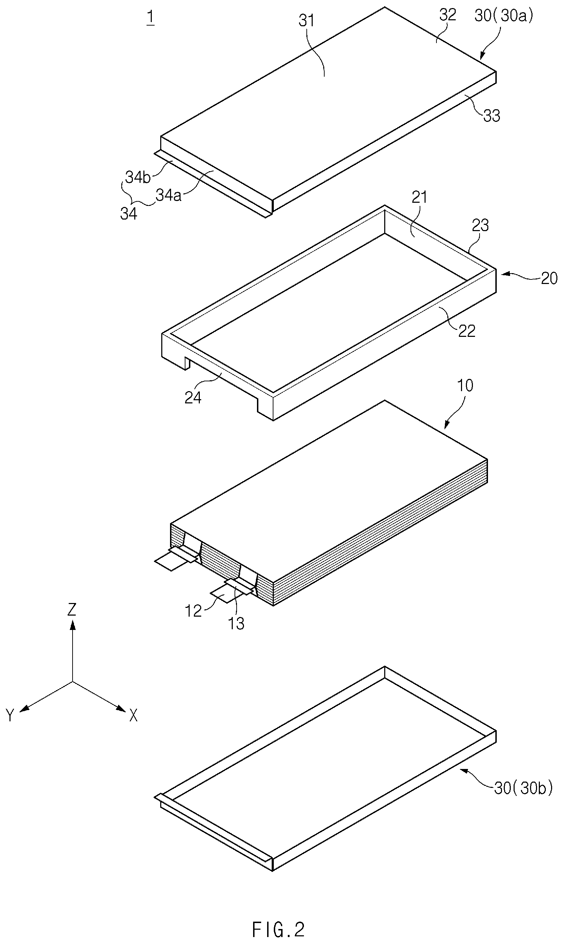

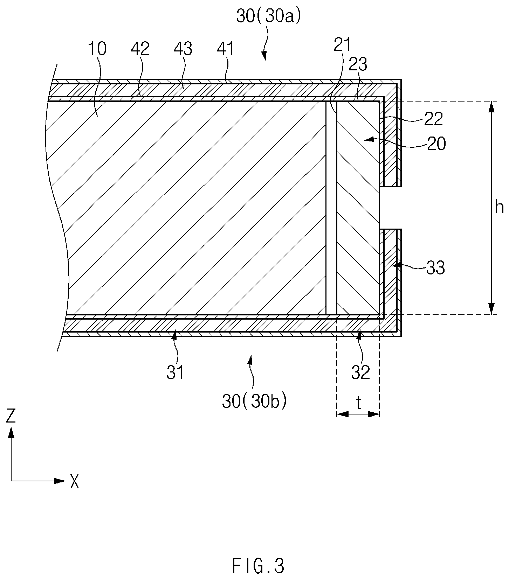

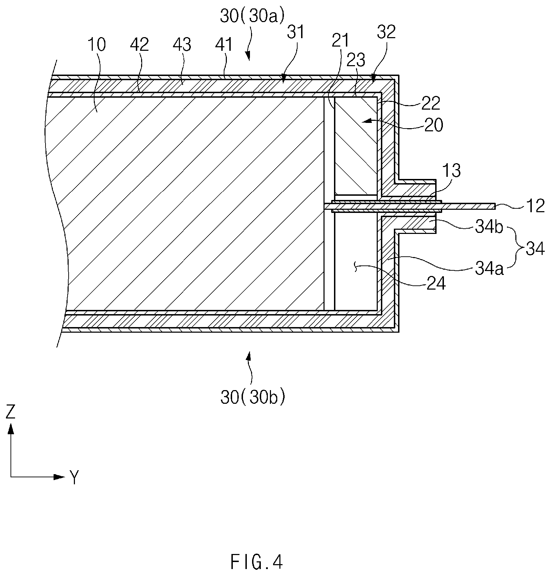

FIG. 1 is a perspective view illustrating an outer appearance of a secondary battery according to an embodiment of the present invention. FIG. 2 is an exploded perspective view of a secondary battery according to an embodiment of the present invention. FIG. 3 is a cross-sectional view taken along a line A-A' in FIG. 1. FIG. 4 is a cross-sectional view taken along a line B-B' in FIG. 1.

A secondary battery 1 according to an embodiment of the present invention may include an electrode assembly 10, a frame 20 that surrounds a circumference of the electrode assembly 10 so as to accommodate the electrode assembly 10, and a pair of exterior sheets 30 sealed to the frame 20 at both sides of the frame 20, respectively, so as to cover the electrode assembly 10.

The electrode assembly 10 may include a positive electrode, a negative electrode, and a separator that is interposed between the positive electrode and the negative electrode in order to insulate the positive electrode and the negative electrode from each other.

The type of the electrode assembly 10 is not limited. As one example, the electrode assembly 10 may be a stacked type electrode assembly in which a positive electrode and a negative electrode are stacked alternately with a separator therebetween. As another example, the electrode assembly 10 may be a jelly-roll-type electrode assembly in which sheet-shaped positive and negative electrodes are wound together with a separator therebetween.

The electrode assembly 10 may be provided with an electrode tab protruding in a full-length direction thereof. The electrode tab may include a positive electrode tab connected to the positive electrode, and a negative electrode tab connected to the negative electrode.

An electrode lead 12 may be connected to the electrode assembly 10. In more detail, the electrode lead 12 may be connected to the electrode tab of the electrode assembly 10. For example, the electrode lead 12 may be welded to the electrode tab. The electrode lead 12 may be provided in a pair, and the pair of electrode leads 12 may include a positive electrode lead connected to the positive electrode tab, and a negative electrode lead connected to the negative electrode tab.

An insulation member 13 may surround a portion of the electrode lead 12. For example, the insulation member 13 may include an insulation tape. The insulation member 13 may insulate the electrode lead 12 and the exterior sheet 30 from each other.

As illustrated in FIG. 2, the pair of electrode leads 12 may extend from one end of the electrode assembly 10 to be parallel to be each other. However, the present invention is not limited thereto, and the pair of electrode leads 12 may extend from both ends of the electrode assembly 10 in opposite directions to each other.

The frame 20 may include an insulation material. For example, the frame 20 may include a plastic material. Accordingly, the insulation between the electrode assembly 10 and the frame 20 may be maintained.

The frame 20 may have higher rigidity than the exterior sheet 30.

The frame 20 may have a closed loop shape extending along the circumference of the electrode assembly 10. That is, the frame 20 may define an inner space in which the electrode assembly 10 is accommodated, and the inner space may be opened to the both sides of the electrode assembly 10 in a height direction (e.g., direction parallel to a Z-axis direction).

The frame 20 may have an approximately rectangle frame shape. In more detail, the frame 20 may have a pair of long sides parallel to the full-length direction of the electrode assembly 10 (e.g., direction parallel to a Y-axis direction), and a pair of short sides parallel to a full-width direction of the electrode assembly 10 (e.g., direction parallel to an X-axis direction). That is, the frame 20 may have four sides.

The frame 20 may be provided in one body, but is not limited thereto.

A height of the electrode assembly 10 and a height h of the frame 20 may correspond to each other. In more detail, the height of the electrode assembly 10 and the height h of the frame 20 may be the same as, or similar to, each other.

A cross-section of the frame 20 may have a rectangle shape. In more detail, the frame 20 may include an inner circumferential surface 21 facing the electrode assembly 10, an outer circumferential surface 22 disposed at a side opposite to the inner circumferential surface 21, and a connection surface 23 that connects the inner circumferential surface 21 and the outer circumferential surface 22 to each other. The connection surface 21 may be each of a top surface and a bottom surface of the frame 20.

In the frame 20, a thickness t between the inner circumferential surface 21 and the outer circumferential surface 22 may be smaller than the height h of the frame 20. That is, the cross-section of the frame 20 may have a rectangle shape that is approximately vertically elongated. Accordingly, a volume unnecessarily occupied by the frame 20 may be reduced, and a decrease in energy density of the secondary battery 1 due to the frame 20 may be minimized.

An opened portion 24 through which the electrode lead 12 passes may be defined in the frame 20. The opened portion 24 may be penetrated from the inner circumferential surface 21 to the outer circumferential surface 22 of the frame 20. As illustrated in FIG. 2, the opened portion 24 may be opened to one side (e.g., lower side) of the frame 20 in a height direction, but is not limited thereto.

The pair of electrode leads 12 may pass through a single opened portion 24. However, the present invention is not limited thereto. For example, a pair of opened portions 24 spaced apart from each other may be defined in the frame 20 so that the pair of electrode leads 12 pass therethrough.

As illustrated in FIGS. 1 and 2, when the pair of electrode leads 12 extend from one end of the electrode assembly 10 to be parallel to each other, the opened portion 24 may be defined in one of the four sides of the frame 20.

Alternatively, when the electrode leads 12 extend from the both ends of the electrode assembly 10 in opposite directions to each other, the opened portion 24 may be defined in each of both sides, which face each other, of the four sides of the frame 20.

The insulation member 13 that surrounds the portion of the electrode lead 12 may be sealed between the pair of exterior sheets 30 outside the opened portion 24. In more detail, the pair of exterior sheets 30 may be sealed to each other outside a side, in which the opened portion 24 is defined, of the four sides of the frame 20, and a portion thereof may be sealed to the insulation member 13.

The exterior sheet 30 may be thermal-fusion sealed to the frame 20 at the both sides of the frame 20 in the height direction. The exterior sheet 30 may be provided in a pair. In more detail, the pair of exterior sheets 30 may include a first exterior sheet 30a sealed at one side (e.g., upper side) of the frame 20, and a second exterior sheet 30b sealed at the other side (e.g., lower side) of the frame 20.

The exterior sheet 30 may be a laminate sheet including a first resin layer 41, a second resin layer 42, and a metal layer 43.

The first resin layer 41 may be the outermost layer of the exterior sheet 30. The first resin layer 41 may electrically insulate the electrode assembly 10 from the outside while protecting the secondary battery 1 against friction and collision with the outside. For example, the first resin layer 41 may include a polyethylene terephthalate (PET) material.

The second resin layer 42 may be the innermost layer of the exterior sheet 30. The second resin layer 42 may be sealed to the frame 20, and may be in contact with, or adjacent to, the electrode assembly 10. Thus, the second resin layer 42 needs to have insulating properties, and needs to have corrosion resistance as being also in contact with an electrolyte. In addition, as the inside needs to be completely sealed to block movement of materials between the inside and the outside, high sealability has to be achieved. That is, the second resin layer 42 and the frame 20 need to have superior thermal bonding strength. For example, the second resin layer 42 may include a polypropylene (PP) or polyethylene (PE) material.

The metal layer 43 may be disposed between the first resin layer 41 and the second resin layer 42. The metal layer 43 may secure mechanical strength of the exterior sheet 30, block entrance of gas, moisture, or the like outside the secondary battery 1, and prevent leak of the electrolyte. For example, the metal layer 43 may include an aluminum (AL) material or a stainless steel (STS) material.

However, the material of each of the layers 41, 42 and 43 of the exterior sheet 30 is not limited to the foregoing examples, and may be selected as appropriate.

In a general pouch for a secondary battery, drawing molding is performed on the laminate sheet to mold a cup part in which the electrode assembly is accommodated. However, the cup part is not provided in the exterior sheet 30 according to an embodiment of the present invention. Thus, the present invention has advantages that a process for molding the cup part is not required, the laminate sheet is not stretched to lead no concern about occurrence of cracks, there is no constraints on a thickness of the electrode assembly 10, and outer appearance quality of the secondary battery 1 is improved.

Each of the exterior sheets 30 may include a cover area 31 that covers the electrode assembly 10, and an edge area 32 that is disposed around the cover area 31 and sealed to the connection surface 23 of the frame 20.

The cover area 31 and the edge area 32 may be coplanar. The cover area 31 and the edge area 32 may be provided to be flat.

The cover area 31 may overlap the electrode assembly 10 in a height direction of the secondary battery 1. The cover area 31 may cover an area opened in the frame 20. The cover area 31 may be in contact with, or adjacent to, the electrode assembly 10.

The edge area 32 may be expanded from the cover area 31. The edge area 32 may overlap the frame 20 in the height direction of the secondary battery 1. The edge area 32 may be bonded and sealed to the frame 20, in more detail to the connection surface 23.

At least one of the pair of exterior sheets 30 may further include a folding area 33 that is folded from the edge area 32 to be sealed to the outer circumferential surface 22 of the frame 20.

The folding area 33 may be folded from the edge area 32 toward the outer circumferential surface 22 of the frame 20. The folding area 33 may be folded at approximately 90 degrees with respect to the edge area 32. Thus, when compared to a case in which a sealing part of a pouch for a secondary battery according to the related art is folded at nearly 180 degrees by double side folding (DSF), a concern that the innermost layer of the laminate sheet, i.e., the second resin layer 42, is broken may be reduced.

The folding area 33 may be bonded and sealed to the frame 20, in more detail to the outer circumferential surface 22. Accordingly, the energy density of the secondary battery 1 may be hardly decreased, and also the sealing strength between the exterior sheet 30 and the frame 20 may be remarkably increased.

The folding area 33 may be folded from a portion of a circumference of the edge area 32. In more detail, the folding area 33 may be sealed by being folded toward the outer circumferential surface 22 of a side, in which the opened portion 24 is not defined, of the frame 20.

As an example, as illustrated in FIG. 2, when the opened portion 24 is defined in one of the four sides of the frame 20, the folding area 33 may be sealed by being folded toward at least one of the other three sides of the frame 20.

As another example, when the opened portion 24 is defined in each of two sides of the four sides of the frame 20, the folding area 33 may be sealed by being folded toward at least one of the other two sides of the frame 20.

When each of the exterior sheets 30 includes the folding area 33, the folding areas 33 of the pair of exterior sheets 30 may not overlap each other. In more detail, the folding area 33 of the first exterior sheet 30a may be sealed to a portion at an upper side of the outer circumferential surface 22 of the frame 20, and the folding area 33 of the second exterior sheet 30b may be sealed to a portion at a lower side of the outer circumferential surface 22 of the frame 20. That is, an end of the folding area 33 of the first exterior sheet 30a and an end of the folding area 33 of the second exterior sheet 30b may be spaced a predetermined distance from, or in contact with, each other. Accordingly, the exterior sheet 30 needs not to have an unnecessarily large size so that manufacturing costs are reduced.

However, when necessary, the folding area 33 of the first exterior sheet 30a and the folding area 33 of the second exterior sheet 30b may partially overlap to be sealed to each other.

Each of the exterior sheets 30 may further include a sealing area 34 connected to the edge area 32.

In each of the exterior sheets 30, the folding area 33 may be folded from a portion of the circumference of the edge area 32, and the sealing area 34 may be connected to another portion of the circumference of the edge area 32. In more detail, the sealing area 34 may be provided to correspond to a side, in which the opened portion 24 is defined, of the frame 20.

As an example, as illustrated in FIG. 2, when the opened portion 24 is defined in one of the four sides of the frame 20, the sealing area 34 may be provided to correspond to the one side.

As an example, when the opened portion 24 is defined in each of two sides of the four sides of the frame 20, the sealing area 34 may be provided to correspond to each of the two sides.

The sealing areas 34 of the pair of exterior sheets 30 may be sealed to each other. The electrode lead 12 may protrude to the outside through a gap between the sealing areas 34 of the pair of exterior sheets 30. The insulation member 13 attached to the electrode lead 12 may be sealed between the sealing areas 34 of the pair of exterior sheets 30.

At least one sealing area 34 of the pair of exterior sheets 30 may be folded twice. In more detail, the at least one sealing area 34 of the pair of exterior sheets 30 may include a first folding part 34a folded from the edge area 32 toward the outer circumferential surface 22 of the frame 20, and a second folding part 34b folded from the first folding part 34a in a direction opposite to a folding direction of the first folding part 34a.

As an example, as illustrated in FIGS. 2 and 4, each of the sealing areas 34 of the pair of exterior sheets 30 may be folded twice. In this case, a value obtained by adding heights of the first folding parts 34a of the pair of sealing areas 34 may correspond to the height of the frame 20. In addition, the second folding parts 34b of the pair of sealing areas 34 may be sealed to each other. The electrode lead 12 may protrude to the outside through a gap between the pair of second folding parts 34b, and the insulation member 13 may be sealed between the pair of second folding parts 34b.

As another example, the sealing area 34 of the first exterior sheet 30a of the pair of exterior sheets 30 may be folded twice, and the sealing area 34 of the second exterior sheet 30b may be coplanar with the edge area 32 so as to be flat. In this case, the height of the first folding part 34a of the sealing area 34 of the first exterior sheet 30a may correspond to the height of the frame 20. In addition, the second folding part 34b of the sealing area 34 of the first exterior sheet 30a may be sealed to the sealing area 34 of the second exterior sheet 30b. The electrode lead 12 may protrude to the outside through a gap between the second folding part 34b of the first exterior sheet 30a and the sealing area 34 of the second exterior sheet 30b, and the insulation member 13 may be sealed between the second folding part 34b of the first exterior sheet 30a and the sealing area 34 of the second exterior sheet 30b.

The sealing area 34, in more detail the first folding part 34a, may cover the opened portion 24 defined in the frame 20.

The first folding part 34a of the sealing area 34 may be sealed to the outer circumferential surface 22 of the frame 20. Accordingly, the sealing strength between the exterior sheet 30 and the frame 20 may be more increased. However, the present invention is not limited thereto.

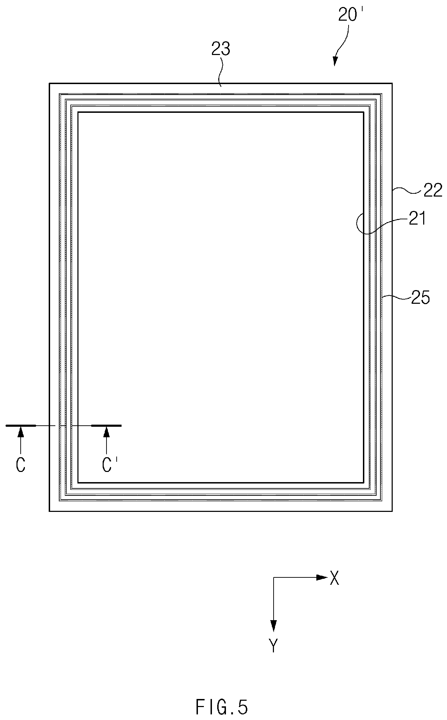

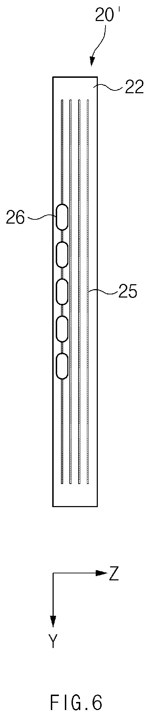

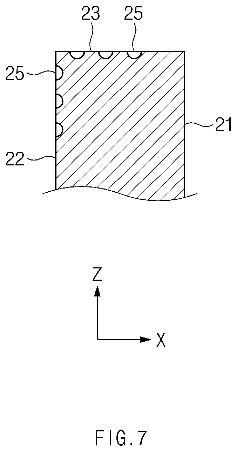

FIG. 5 is a plan view of a frame according to another embodiment of the present invention. FIG. 6 is a side view of a frame according to another embodiment of the present invention. FIG. 7 is a cross-sectional view taken along a line C-C' in FIG. 5.

Hereinafter, the other embodiment will be described by applying the content in common with the content described above , and focusing on differences.

In a frame 20' according to another embodiment of the present invention, a groove 25 facing the outside of the frame 20' may be defined so as to increase a sealing surface area with an exterior sheet 30.

The groove 25 may extend along the frame 20'. In more detail, the groove 25 may extend in a circumferential direction of the frame 20'. However, the present invention is not limited thereto, and the groove 25 may be defined to be inclined so that the groove 25 has a predetermined angle with respect to an extension direction of the frame 20'.

The groove 25 may be provided in a plurality of lines parallel to each other.

Even when a plurality of protrusions are provided on the frame 20', a portion between the plurality of protrusions may be interpreted as the groove 25.

The groove 25 may face the outside of the frame 20'. In more detail, the groove 25 may be defined in a connection surface 23 and/or an outer circumferential surface 22 of the frame. Accordingly, the groove 25 facing the outside of the frame 20' may be easily covered from the outside by the exterior sheet 30.

The groove 25 may be defined in the connection surface 23 of the frame 20'. The groove 25 defined in the connection surface 23 may be sealed to an edge area 32 of exterior sheet 30.

The groove 25 may be defined in the outer circumferential surface 22 of the frame 20'. The groove 25 defined in the outer circumferential surface 22 may be sealed to a folding area 33 of the exterior sheet 30, or be sealed to a first folding part 34a of a sealing area 34.

As the sealing surface area is increased due to the groove 25, the sealing strength between the frame 20 and the exterior sheet 30 may be more increased.

At least one vent hole 26 disposed in a side other than the side in which the opened portion 24 (see FIG. 2) is defined may be defined in the frame 20'.

The vent hole 26 may be penetrated from an inner circumferential surface 21 to an outer circumferential surface 22 of the frame 20. The vent hole 26 may be covered by the folding area 33 of the exterior sheet 30.

A peripheral part of the vent hole 26 of the outer circumferential surface 22 of the frame 20 may be sealed to the folding area 33 of the exterior sheet 30. Thus, during a normal operation of the secondary battery 1, the vent hole 26 may be in a closed state.

However, when fire or gas is generated in the electrode assembly 10 due to an abnormal operation of the secondary battery 1, an internal pressure of the secondary battery 1 may be increased due to the gas, and the sealing of the peripheral part of the vent hole 26 may be first released. Accordingly, the gas may be easily vented to the outside of the secondary battery 1 through the vent hole 26.

To this end, a portion, which is sealed to the peripheral part of the vent hole 26, of the folding area 33 of the exterior sheet 30 may include a weak sealing part or a non-sealing part. Alternatively, a distance between an end of the folding area 33 and the vent hole 26 may be decreased to reduce the sealing surface area. However, the present invention is not limited thereto, and the configuration is not limited as long as the sealing of the peripheral part of the vent hole 26 is capable of being first released.

As the vent hole 26 is defined the side other than the side in which the opened portion 24 (see FIG. 2) is defined, venting of gas and flame including dusts to a side of the electrode lead 12 may be delayed. Accordingly, fire spread or thermal runaway may be prevented from occurring in a battery module or battery pack including a plurality of secondary batteries 1.

The description of the present invention is intended to be illustrative, and various changes and modifications can be made by those of ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

### [Description of the Symbols]

| | | | |
|---|---|---|---|
| 1: | Secondary battery | 10: | Electrode assembly |
| 12: | Electrode lead | 13: | Insulation member |
| 20: | Frame | 21: | Inner circumferential surface |
| 22: | Outer circumferential | 23: | Connection surface |
| 24: | Opened portion | 25: | Groove |
| 26: | Vent hole | 30: | Exterior sheet |
| 31: | Cover area | 32: | Edge area |
| 33: | Folding area | 34: | Sealing area |
| 41: | First resin layer | 42: | Second resin layer |
| 43: | Metal layer | | |

## Claims

1. A secondary battery comprising:
an electrode assembly:
a frame configured to surround a circumference of the electrode assembly so as to accommodate the electrode assembly, and comprising an insulation material; and
a pair of exterior sheets sealed to the frame at both sides of the frame, respectively, so as to cover the electrode assembly,
wherein a groove facing the outside of the frame is defined in the frame so that a sealing surface area between the exterior sheet and the frame is increased.

2. The secondary battery of claim **1,** wherein a height of the electrode assembly and a height of the frame correspond to each other.

3. The secondary battery of claim **1,** wherein the groove extends along the frame.

4. The secondary battery of claim **3,** wherein the groove is provided in a plurality of lines parallel to each other.

5. The secondary battery of claim **1,** wherein an opened portion through which an electrode lead connected to the electrode assembly passes is defined in the frame.

6. The secondary battery of claim **5,** wherein an insulation member configured to surround a portion of the electrode lead is sealed between the pair of exterior sheets outside the opened portion.

7. The secondary battery of claim **5,** wherein at least one vent hole is defined in the frame, the at least one vent hole being disposed in a side of the frame other than a side in which the opened portion is defined.

8. The secondary battery of claim **1,** wherein the frame comprises:
an inner circumferential surface facing the electrode assembly;
an outer circumferential surface disposed at a side opposite to the inner circumferential surface; and
a connection surface configured to connect the inner circumferential surface and the outer circumferential surface to each other.

9. The secondary battery of claim **8,** wherein a thickness between the outer circumferential surface and the inner circumferential surface is smaller than a height of the frame.

10. The secondary battery of claim **8,** wherein each of the exterior sheets comprises:
a cover area configured to cover the electrode assembly; and
an edge area disposed around the cover area and sealed to the connection surface.

11. The secondary battery of claim 10, wherein the cover area and the edge area are coplanar.

12. The secondary battery of claim 10, wherein at least one of the pair of exterior sheets further comprises a folding area that is folded from the edge area to be sealed to the outer circumferential surface.

13. The secondary battery of claim 12, wherein the folding areas of the pair of exterior sheets do not overlap each other.

14. The secondary battery of claim 12, wherein at least one vent hole covered by the folding area is defined in the frame.

15. The secondary battery of claim 10, wherein e ach of the exterior sheets further comprises a sealing area connected to the edge area,
wherein the sealing areas of the pair of exterior sheets are sealed to each other.

16. The secondary battery of claim 15, wherein an opened portion through which an electrode lead connected to the electrode assembly passes is defined in the frame,
wherein the sealing area covers the opened portion.

17. The secondary battery of claim 15, wherein the sealing area of at least one of the pair of exterior sheets comprises:
a first folding part folded from the edge area toward the outer circumferential surface; and
a second folding part folded from the first folding part in a direction opposite to a folding direction of the first folding part.

18. The secondary battery of claim 15, wherein t he first folding part is sealed to the outer circumferential surface.
